Europäisches Patentamt

European Patent Office

Office européen des brevets

(19)

(11) Numéro de publication: **0 129 566**
**B1**

(12) # FASCICULE DE BREVET EUROPÉEN

(45) Date de publication du fascicule du brevet:
18.05.88

(51) Int. Cl.⁴: **G 01 L 5/24, F 16 B 31/02**

(21) Numéro de dépôt: 84900015.3

(22) Date de dépôt: 20.12.83

(86) Numéro de dépôt international:
PCT/BE 83/00021

(87) Numéro de publication internationale:
**WO 84/02577 (05.07.84 Gazette 84/16)**

(54) **PROCEDE ULTRASONIQUE DE MESURE DE CONTRAINTE DANS UN BOULON OU PIECE ANALOGUE, ADAPTE A CE PROCEDE.**

(30) Priorité: 24.12.82 LU 84553

(43) Date de publication de la demande:
02.01.85 Bulletin 85/1

(45) Mention de la délivrance du brevet:
18.05.88 Bulletin 88/20

(84) Etats contractants désignés:
AT BE CH DE FR GB IT LI LU NL SE

(56) Documents cité:
GB-A-1 369 858

(73) Titulaire: de Halleux, Benoit, 82, avenue Chevalier Jehan, B-1300 Wavre (BE)

(72) Inventeur: de Halleux, Benoit, 82, avenue Chevalier Jehan, B-1300 Wavre (BE)

(74) Mandataire: Van Malderen, Michel, p.a. Freylinger & Associés 22 avenue J.S. Bach (bte 43), B-1080 Bruxelles (BE)

LIBER, STOCKHOLM 1988

## Description

La présente invention concerne un procédé de mesure de la contrainte dans un boulon ou une pièce analogue, notamment un boulon à haute résistance, une tige filetée ou un tirant, par réflexion d'ondes acoustiques.

Elle concerne également des boulons ou pièces analogues adaptés de manière à pouvoir effectuer la mesure de la contrainte au moyen du procédé suivant l'invention.

Il faut entendre par contrainte dans le sens de l'invention la cause qui fait varier le temps de transit du rayon acoustique utile sur un parcours de longueur déterminée.

Il peut s'agir d'une variation de l'état de contrainte interne au sens usuel du terme, le long du trajet du rayon acoustique, les températures locales restant constantes ou d'un système de forces extérieures appliquées au solide qui produit une variation de l'état de contrainte interne au sens usuel du terme, le long du trajet acoustique.

Par précontrainte d'un élément, on entend une technique particulière de mise en oeuvre de l'élément, consistant à y introduire une traction ou une compresison initiale qui subsiste éventuellement avec une amplitude variable quel que soit le système des charges appliquées.

L'invention trouve en particulier des applications dans la mesure de la contrainte apparaissant dans les boulons, les tiges filetées et les tirants, mais n'est pas limitée à ces applications.

La particularité des boulons à haute résistance réside dans le fait qu'ils sont soumis lors du montage à un état de précontrainte de façon à développer sur les surfaces de contact des éléments assemblés une pression locale capable de s'opposer à leur mouvement relatif sous l'effet de sollicitations extérieures.

D'où l'importance de pouvoir contrôler et mesurer la précontrainte introduite dans le corps du boulon lors du serrage.

Les techniques de mesure mécanique comme, par exemple, clé dynamométrique, notamment pour la mesure de la précontrainte lors du serrage, s'étant avérées trop imprécises et ne permettant que diffilement des mesures échelonnées dans le temps de la précontrainte résiduelle, on a recherché d'autres solutions.

Aussi certains auteurs ont proposé une mesure de contrainte par des ondes acoustiques.

En effet, on sait que les vitesses de propagation des ondes acoustiques et en particulier des ondes longitudinales (ondes L) , des ondes transversales (ondes T) et des ondes de surface (ondes R) sont fonction des paramètres physiques du milieu matériel dans lequel se propage l'onde. A titre d'exemple pour un milieu homogène et isotrope, les vitesses des ondes L, des ondes T et des ondes R sont fonction du module longitudinal d'élasticité E, de la densité $\rho$ et du coefficient de Poisson $\mu$. Quant aux ondes de Lamb, leur vitesse de propagation est de plus fonction de la fréquence. Les vitesses des ondes sont influencées par tous les facteurs qui influencent ces paramètres physiques et en particulier par la contrainte et par la température.

Les ondes acoustiques longitudinales et transversales émises par un cristal plan présentent pour des fréquences dépendant du milieu matériel et du diamètre équivalent du cristal émetteur, une propriété de directivité qui permet de localiser sélectivement les anomalies réfléchissant tout ou une partie de l'énergie de l'onde incidente, et ce en fonction des positions respectives de l'émetteur ainsi que du récepteur et de l'angle de pénétration de l'axe du faisceau dans le matériau.

Dans les procédés connus, on mesure la contrainte soit par une mesure du temps de transit d'une onde ultrasonore dans la longueur du corps, par exemple du boulon, mesure qui peut être réalisée par une méthode impulsionnelle échographique, soit par la détermination des fréquences de résonance d'une onde entretenue. Les fréquences de résonance constituent une progression arithmétique dont la raison est la fréquence fondamentale. L'inverse de cette dernière est le temps de transit minimum du rayon acoustique utile.

Généralement la mesure de la contrainte par ultrasons exploite cependant la mesure directe du temps de transit d'une onde longitudinale ou d'une onde transversale.

A cet effet on peut effectuer une mesure par transmission en plaçant un émetteur d'ultrasons d'un côté de la pièce et un récepteur du côté opposé. On peut cependant également effectuer une mesure par réflexion en utilisant un ou deux palpeurs qui consistent en un émetteur et un récepteur, le plus souvent combinés ou séparés dans un même palpeur, la mesure étant alors effectuée par détection d'échos résultant de réflexions de l'onde sur les extrémités de la pièce et détermination du temps de transit du rayon acoustique utile, par détermination du temps séparant l'apparition des pieds des pics d'écho d'éxtrémités sur la représentation de type A, chaque réflexion provoquant en effet, si l'énergie réfléchie revient au récepteur, un écho d'anomalie caractérisé par un pic dans la représentation de type A utilisée dans les appareils conventionnels courants de contrôle par ultrasons.

La manière classique de procéder pour déterminer la contrainte dans un boulon consiste à disposer, de manière adéquate, un palpeur sur une extrémité du boulon et de mesurer le temps nécessaire au rayon acoustique utile pour parcourir deux ou un multiple de deux fois la longueur du boulon, le rayon acoustique étant réfléchi partiellement ou totalement aux deux extrémités du boulon.

Le temps de transit dans le boulon est fonction de la contrainte sur le trajet du rayon acoustique utile car celle-ci influence la vitesse de transit et la longueur du transit.

Le procédé classique présente cependant de nombreux inconvénients:

- le composant mécanique par exemple un boulon ne présente pas une contrainte uniforme sur la longueur parcourue par l'onde acoustique. Dans le cas du boulon precontraint, le fût ête est soumise à un effort complexe comprenant de la flexion, la zone filetée est soumise à de la traction variable et la partie libre éventuelle de la tige filetée est sans contrainte.

Il en résulte une imprécision de connaissance de la longueur de la partie tendue du boulon où la vitesse de propagation des ondes acoustiques est influencée par la contrainte et de la longueur totale du boulon dont une partie seulement est soumise à une contrainte. Une erreur systématique est donc commise lors de la détermination de la contrainte par onde acoustique sauf étalonnage dans une configuration identique. Ceci exige donc un étalonnage pour chaque position de l'écrou sur la tige filetée et chaque longueur de boulon ;

- dans un assemblage, il est rare que les surfaces d'appui de la tête du boulon et de l'écrou soient rigoureusement planes et parallèles. Il s'ensuit une flexion du fût du boulon lors du serrage qui change le rayon acoustique utile pour la mesure et modifie du fait de la flexion seule, la longueur du trajet caractéristique. Cet inconvénient introduit du fait de ce qui precède une première erreur systématique dans la mesure de la contrainte par onde acous tique. En outre, la contrainte locale introduite par la flexion sur le trajet du rayon acoustique utile modifie la vitesse de propagation du rayon acoustique utile et de ce fait fausse la mesure de la précontrainte du boulon. Le manque de parallèlisme des extrémités du boulon ou de la tige filetée dû à la flexion peut avoir pour conséquence que l'énergie acoustique réfléchie n'atteigne pas le récepteur et rende toute mesure impossible lorsqu'on effectue la mesure par réflexion.

- Si les deux extrémités d'une pièce étroite tout en ayant des surfaces planes et parallèles ne sont pas suffisamment perpendiculaires à l'axe, bien qu'il soit possible de propager une onde acoustique dans le matériau, dans le cas où la pièce étroite présente une longueur importante, il peut être difficile voire impossible de faire parvenir par réflexion sur une extrémité un rayon acoustique utile au récepteur, ce qui rend la mesure de la contrainte impossible.

- Le positionnement exact du palpeur sur l'extrémité du boulon a de l'importance si les surfaces réfléchissantes ne sont pas rigoureusement parallèles ou ne sont pas d'une planéité parfaite. En effet, on exploite l'information fournie par le rayon acoustique de l'onde de réflexion qui atteint le récepteur et qui présente avantageusement le temps de transit le plus faible dans la pièce. Ce temps de transit minimum est alors fonction de la position du palpeur sur les extrémités de la pièce. La largeur et l'ouverture du faisceau ont de l'importance car des rayons acoustiques peuvent être réfléchis par des réflecteurs parasites par exemple les arêtes et les faces des filets avant que le rayon acoustique utile ne soit réfléchi par la seconde extrémité de la pièce. La hauteur des pics des échos parasites peut gêner la selection des pics des échos utiles. De plus si il y a superposition des pics des échos parasites et des pics des échos utiles, il n'est plus possible de déterminer avec grande précision le temps minimum de transit du rayon utile surtout si l'on exploite un trajet ou un ensemble de trajets du rayon acoustique autre que le premier trajet. Le temps minimum de trajet se détermine en effet de manière idéale par la détermination du temps séparant les pieds des pics des échos retenus.

- La concavité ou convexité de l'extrémité du boulon fausse la mesure du temps de transit minimum du rayon acoustique utile pour des positions différentes du palpeur sur la tête pour les mêmes raisons que ci-dessus.

- Les attaques par corrosion généralisées de la tête et de l'extrémité du boulon font varier la longueur de reference, c'est-à-dire le trajet du rayon qui a le plus court temps de transit. De plus, les surfaces de la tête et de l'extrémité du boulon peuvent être détériorées en service par exemple par usure, par matage, par corrosion généralisée ou localisée, de telle façon que la position relative du palpeur par rapport à la pièce ait changé. Dans les méthodes courantes de mesure de la contrainte dans les boulons, il n'est pas permis de rectifier les extrémités pour pouvoir réaliser les mesures. La rectification entraîne en effet, une diminution non quantifiable de la longueur de transit.

- Un couplage est habituellement nécessaire entre le ou les palpeurs et la pièce pour transmettre à celle-ci une partie de l'énergie acoustique de l'émetteur et pour recueillir au récepteur une partie de l'énergie réfléchie. L'épaisseur du film du couplant entre le ou les palpeurs et la pièce influence la mesure du temps de transit de l'onde acoustique dans le cas où l'on exploite le premier trajet des ondes acoustiques dans la pièce. En effet, le pic de réflexion de la face inférieure du palpeur recouvre le pic de réflexion à l' entrée dans la pièce. Le temps de transit dans le couplant est alors compté comme faisant partie du temps de transit dans la pièce. Etant donné que pour les dimensions courantes de boulons, les variations du temps de transit exploitées pour la mesure de la contrainte sont faibles, l'erreur faite sur le temps de transit du boulon à cause du temps de transit dans le couplant peut entraîner une grande erreur sur la contrainte.

La pression de contact palpeur-pièce a donc une important ce puisqu'elle modifie l'épaisseur du film du couplant.

- Des auteurs proposent d'éliminer les influences dûes à l'entrée de l'onde dans le matériel en mesurant le temps nécessaire à l'onde pour parcourir plusieurs fois la longueur du boulon tout en éliminant le premier parcours.

Cette manière de procéder n'est en principe applicable qu'avec des palpeurs où l'émetteur et le récepteur sont combinés et non avec le ou les palpeurs à émetteur et récepteur séparés. Elle peut cependant se heurter aux difficultés dues aux échos parasites provenant entre autres, des réflexions éventuelles sur les faces et les angles des filets. Les pics parasites dûs aux réflexions sur les filets entâchent la mesure d'imprécision car il pourra ne pas être possible de déterminer avec l'exactitude nécessaire le temps minimum de transit du rayon acoustique entre les surfaces réfléchissantes caractéristiques. Dans ces cas, les autres inconvénients ne sont toujours pas éliminés.

On a également proposé selon GB-A-1 369 858 de mesurer une force axiale, notamment dans un boulon en exploitant la fréquence de résonance naturelle de l'objet subissant la mesure sous l'effet des différentes oscillations forcées.

La présente invention vise donc à fournir un procédé de mesure de la contrainte dans un boulon ou pièces analogue en mettant à profit la réflexion d'un rayon acoustique et en mesurant le temps de transit de celui-ci à l'aide d'un appareillage ad-hoc par exemple un appareillage déterminant le temps entre les pieds de deux pics de réflexion d'échos caractéristiques tout en éliminant les inconvénients des procédés connus ou en réduisant tout ou moins fortement leur impact.

Le procédé, de la présente invention est caractérisé en ce qu'on choisit dans le boulon ou pièce analogue une ou plusieurs fins de trajets rectilignes de mesure matérialisées par un réflecteur artificiel interne, en ce qu'on envoie un faisceau d'ondes acoustiques de telle façon que des rayons acoustiques porteurs d'énergie suffisante touchent les réflecteurs utiles, en ce qu'on sélectionne les échos correspondants aux réflecteurs, en ce qu'on détermine par mesure les temps de transit caractéristiques des rayons acoustiques utiles jusqu'au réflecteur artificiel interne et en ce qu'on transpose les temps de transit pour chaque réflecteur interne considéré isolément ou les différences respectives de temps de transit de chaque couple de réflecteurs en valeur de contrainte extérieure ou en valeur de contrainte dans la zone délimitée par chaque couple de réflecteurs.

Une forme d'exécution pratique préférée de l'invention est caractérisée en ce qu'on choisit dans le milieu un trajet rectiligne de mesure limité par deux réflecteurs artificiels internes, en ce qu on envoie un faisceau d'ondes acoustiques dont l'axe est substantiellement confondu avec le trajet rectiligne de mesure choisi, en ce qu'on sélectionne les échos correspondants aux réflecteurs, en ce qu'on mesure le temps de transit caractéristique d'un rayon acoustique entre les deux réflecteurs qui est la différence des temps de transit des rayons acoustiques, confondus ou substantiellement parallèles jusqu'à chacun des deux réflecteurs et en ce qu'on transpose les valeurs de temps de transit en valeurs de contrainte.

Avantageusement, le temps de transit caractéristique est le temps de transit minimum.

Dans le but de la mesure, on utilisera avantageusement un appareillage permettant de sélectionner les pieds de pics dus aux réflecteurs artificiels internes et de faire la différence entre les deux temps de transit de l'onde depuis la source émettrice jusqu'au réflecteur correspondant.

Les réflecteurs artificiels sont avantageusement disposés de manière telle que le trajet de l'onde acoustique soit parallèle à et très proche de la ligne neutre, soit même sur celle-ci. Cette disposition permet de pratiquement éliminer les influences de la flexion qui peut fausser les mesures dans le procédé courant.

On travaille de préférence avec un faisceau ultrasonore suffisamment étroit qui augmente la précision de la mesure, si on le combine avec des reflecteurs pratiquement ponctuels ou ayant un comportement pratiquement assimilable à un réflecteur ponctuel. Avantageusementle faisceau utilisé sera focalisé.

La mesure du temps de transit peut être effectuée par une émission continue et détermination des fréquences de résonance de l'onde dues aux reflecteurs internes. Les fréquences de résonance constituent une progression arithmétique dont la raison est la fréquence fondamentale. L'inverse de cette dernière est le temps de transit minimum du rayon acoustique utile entre les réflecteurs concernés. On profilera avantageusement l'extrémité du boulon par exemple de façon convexe ou concave pour éliminer la fréquence de résonance liée à la longueur du boulon.

De préférence, la mesure du temps de transit de l'onde acoustique entre les deux réflecteurs sera avantageusement effectuée par l'emploi d'un mesureur d'épaisseur exploitant les ondes ultrasonores. En fait l'appareil mesureur d'épaisseur par ultrasons peut être considéré comme un appareil qui mesure de manière directe ou indirecte un temps de transit d'un rayon ultrasonore dans la pièce.

Il faut donc mesurer le temps $t_0$ de transit du rayon acoustique utile entre les deux réflecteurs artificiels internes lorsque le corps n'est pas soumis à une contrainte.

Ensuite, on effectuera la mesure du temps t de transit de l'onde acoustique entre les deux réflecteurs internes lorsque le corps est soumis à une contrainte.

La différence entre t et $t_0$ est due:
1° à la variation de la vitesse de l'onde acoustique avec la contrainte sur le trajet du rayon acoustique utile,
2° à la variation de la distance caractéristique entre les réflecteurs internes du fait de la contrainte.

Il est nécessaire d'établir une courbe d'étalonnage reliant la contrainte au temps t de transit entre les deux réflecteurs internes et permettant de transposer les valeurs de temps de transit en valeurs de contrainte.

Suivant une variante opératoire, on pourrait utiliser des ondes ultrasonores transversales au cas ou la contrainte appliquée au corps lors de la phase d'étalonnage montrerait une influence sur le temps de transit caractéristique du rayon acoustique utile le long de la ligne séparant les réflecteurs internes artificiels. Ceci présente cependant plusieurs inconvénients connus par l'homme de l'art notamment la difficulté de générer ce type d'ondes dans le matériau dans le cas d'une propagation normale à l'extrémité de la pièce.

Suivant une variante opératoire, on pourrait utiliser tout type d'ondes acoustiques, en particulier, des ondes ultrasonores de surface, pourvu que la contrain te appliquée au corps ait une influence sur le temps de transit caractéristique du rayon acoustique utile suite à la contrainte ainsi créée sur la ligne séparant les réflecteurs internes artificiels. Dans ce cas, les réflecteurs internes artificiels devraient être relativement proches de la surface puisque l'onde de surface n'affecte qu'une profondeur du matériau de l'ordre de la longueur d'onde.

Suivant une autre variante opératoire particulièrement préférée pour le cas des boulons, tiges filetées et tirants, on utilise des ondes ultrasonores longitudinales qui ont l'avantage en cas d'incidence normale d'être facilement transmises à la pièce.

On pourrait également utiliser en combinaison et concomittement ou successivement une onde longitudinale et une onde transversale, ce qui donne une donnée supplémentaire pour déterminer la contrainte.

Le rapport des temps de transit respectifs d'une onde L et d'une onde T dans un milieu suffisamment homogène et isotrope entre deux réflecteurs es t égal à l'inverse du rapport des vitesses respectives de ces deux ondes et est uniquement dépendant de la valeur du coefficient de Poisson $\mu$. Il ne dépend donc pas de la distance entre les réflecteurs. Il suffit donc d'étalonner ce rapport des temps de transit pour le matériau en fonction de la contrainte. Il est souhaitable de le faire sur le composant avec les réflecteurs.

Dans d'autres cas - milieux non-homogènes ou anisotropes - par exemple, lorsque les étalonnages avec chaque type d'onde sont appliqués au composant comportant les deux réflecteurs artificiels internes, il est possible de tenir compte éventuellement des autres facteurs influençant le temps de transit de l'onde dans le matériau, comme la température par exemple.

La mesure de la contrainte par ultrasons dans le domaine plastique n'est possible que si l'on peut s'affranchir de l'augmentation non-réversible de distances entre deux réflecteurs. Une façon d'y parvenir est d'utiliser en combinaison et concomitamment ou successivement une onde L et une onde T pour autant que le rapport des deux temps de transit ne dépende pas notablement des déformations plastiques, ce qui permet dans les milieux suffisamment homogènes et isotropes de s'affranchir de la distance instantanée entre les réflecteurs. Cette solution pourrait vraisemblablement être étendue au cas des milieux non-homogènes et/ou anisotropes.

On peut espérer résoudre également ces problèmes en utilisant deux ondes de même type ou non et de fréquence différente et d'exploiter l'éventuelle influence de la fréquence sur la vitesse de propagation pour permettre de la même façon et avec la même limitation de mesurer la contrainte dans le domaine plastique.

Dans ce cas, on pourrait indirectement à l'aide de courbes d'étalonnages ad-hoc faites sur le matériau, déterminer tant pour la première solution que pour la seconde, l'amplitude de la déformation plastique, en se trouvant dans le cas d'une jauge qui est simultanément jauge de contrainte et une jauge de déformation plastique.

On pourrait également utiliser en combinaison et concomitemment ou successivement deux ou plusieurs ondes acoustiques de fréquence différente au cas où, dans un milieu réel, la vitesse d'une onde acoustique serait influencée suffisamment par la fréquence de l'onde, ce qui donnerait une ou plusieurs données supplémentaires à l'étalonnage pour déterminer la contrainte.

On pourrait donc ainsi s'affranchir de la connaissance de la distance entre deux réflecteurs internes ou tenir compte d'autres facteurs influençant le temps de transit de l'onde dans le matériau, comme la température ou éventuellement la déformation plastique, par exemple. En choisissant un trajet caractéristique soumis à une contrainte uniforme, on élimine les zones non intéressantes et pertubatrices pour la mesure. Ce procédé permet donc, dans le cas où l'étalonnage n'a pas été effectué dans une configuration identique de la tige filetée et de l'écrou, d'éliminer du trajet caractéristique du rayon acoustique, les zones sans contrainte et/ou soumises à une contrainte non uniforme qui sont une cause d'erreur sur la mesure de la contrainte du fait que la répartition des contraintes y est mal définie et qu'elle influence le temps de transit en affectant la vitesse de l'onde et la longueur du trajet caractéristique.

Le procédé de l'invention n'exige donc plus d'étalonnage pour chaque position de l'écrou dans le cas de l'application à une structure boulonnée. Une remarque équivalente peut être faite dans le cas de la tige filetée et du tirant fileté ou ancré dans un massif.

Même si les surfaces d'appui de la tête du boulon et de l'écrou ne sont pas parallèles du fait de la flexion, l'effet de la flexion sur la mesure est considérablement réduit par rapport aux procédés connus. En effet, les réflecteurs sont plus petits et le trajet des ondes est celui reliant par une droite les deux réflecteurs disposés sur la ligne neutre légèrement incurvée. L'erreur due à la différence entre la longueur de la corde et la longueur de l'arc formé par la fibre neutre n'est pas sensiblement modifiée mais le rayon acoustique utile se propage dans un milieu proche de l'axe de la pièce où la contrainte pertubatrice due à la flexion peut habituellement être considérée comme négligeable tandis que dans les procédés connus ce rayon est déplacé dans la zone de compression introduite par la flexion. Dans le procédé de l'invention, on s'approche donc bien de la mesure de la contrainte le long de l'axe de la pièce si les réflecteurs artificiels sont situés sur cet axe.

Etant donne que l'on exploite le temps de transit du rayon acoustique utile sur le trajet séparant les deux réflecteurs artificiels, on élimine les inconvénients liés au pic de réflexion d'entrée dans la pièce ainsi que les inconvénients liés au couplage, à la pression de couplage, à l'état de surface, à l'usure et au matage des extrémités du boulon, etc...

On pourrait s'affranchir également des écarts de positionnement du palpeur sur la tête du boulon en exploitant statistiquement les temps de transit, par exemple en utilisant l'espérance mathématique ou son estimation, des temps de transit obtenus pour diverses positions et orientations du palpeur sur la tête du boulon.

En utilisant des réflecteurs artificiels petits (quasi-ponctuels ou équivalents), le palpeur se trouvera avantageusement toujours au même endroit sur la tête, faute de quoi on ne captera pas de signal ou on captera des signaux d'énergie différente.

Ce positionnement est rendu possible par la présence des réflecteurs internes artificiels. Il nécessitera cependant éventuellement l'emploi d'un appareil classique permettant de visualiser l'amplitude des pics des échos de réflexion relatifs aux réflecteurs artificiels internes dans une représentation de type A ou équivalente de façon à positionner le palpeur à l'endroit où les pics des échos de réflexion des deux réflecteurs artificiels soient si possible respectivement identiques en amplitude aux pics obtenus lors de l'étalonnage.

Comme on sait que l'énergie acoustique transmise dépend entre autre de l'épaisseur du liquide de couplage et de la pression exercée sur le palpeur, il faut tout au moins que les hauteurs relatives des pics soient substantiellement dans un même rapport que lors de l'étalonnage, ce qui revient à dire que les proportions de l'énergie transmise dans le boulon et réfléchies par chaque réflecteur vers le récepteur soient substantiellement identiques.

Pour certaines configurations de réflecteurs artificiels, à savoir par exemple des alésages axiaux concentriques de diamètres différents - habituellement les pics des échos de réflexion des deux réflecteurs artificiels seront autant que possible simultanément maximum lorsque l'axe du faisceau sera substantiellement confondu avec l'axe du boulon.

En ce qui concerne ce problème de positionnement du palpeur sur l'extrémité du boulon, on peut faire les considérations suivantes:

La mesure de contrainte ne pose pas de problème lorsque le palpeur reste en position fixe sur l'extrémité du boulon.

Lorsque, lors de chaque mesure, on est amené à enlever et à remettre le palpeur, si les réflecteurs artificiels sont éloignés par exemple d'un mètre environ du palpeur, on n'observe pas de variations aléatoires sensibles du temps de transit attribuables au positionnement du palpeur. Pour certains types de réflecteurs, il arrive cependant qu'on mette en évidence deux ou plusieurs familles de temps de transit caractéristique.

Dans le cas où les réflecteurs sont des alésages orthogonaux au fût du boulon et faisant entre eux un certain angle, il s'agit de la réflexion par le second réflecteur de part et d'autre de l'ombre créée par le premier.

Lorsque les réflecteurs sont rapprochés de l'extrémité où se trouve le palpeur, on observe une variation aléatoire du temps de transit relatif à chaque famille suivant la position du palpeur. Ces écarts sont dus entre autre à un effet de parallaxe, à la géométrie imparfaite des réflecteurs, au défaut d'alignement de réflecteurs cylindriques, à l'imperfection du palpeur, par exemple non-parallèlisme du cristal, avec la face de contact et non-uniformité de l'énergie acoustique dans le faisceau.

Il peut donc y avoir un intérêt de disposer d'un positionnement géométrique du palpeur sur la face de contact comme par exemple une douille de positionnement ou un logement dans l'extrémité de la piece.

De plus, la présence des réflecteurs internes n'oblige plus à générer et recevoir l'onde acoustique par contact. On pourrait générer l'onde sans contact avec le boulon en exploitant dans les cas des matériaux ferromagnétiques la magnétostriction ou en exploitant l'ébranlement mécanique produit par l'impact d'un rayon laser.

On constate donc que le procédé de l'invention est plus précis que les procédés connus et qu'il permet d'éliminer les inconvénients cités.

Il faut également noter que le procédé de l'invention est extrêmement simple et que l'invention réside justement dans cette solution d'extrême simplicité alors que toutes les tentatives de solution antérieures visent à améliorer partiellement les procédés ou à n'éliminer que certains inconvénients par exemple en ayant des exigences sévères sur la qualité des surfaces d'extrémités de boulon, etc... sans jamais éliminer tous les inconvénients.

Au cours de la description de la présente invention, on se réfère généralement, à titre d'illustration, à des boulons. Il faut noter que l'invention apporte une solution très attendue dans ce domaine de la mécanique. L'application de la présente invention n'est cependant pas limitée aux boulons ; on peut citer tout élément d'assemblage comme les tiges filetées, les goujons , les rivets , etc. ou même tout composant ou élément de structure.

Le domaine d'application n'est pas limité à l'acier. On peut analyser ou mesurer la contrainte de tout matériau, même dans les matières dites plastiques pour autant qu'elles soient perméables aux ondes acoustiques aux fréquences utiles.

Suivant un mode d'exécution de l'invention, les réflecteurs artificiels consistent en des perforations ou alésages transversaux. Ceux-ci sont avantageusement disposés dans des plans parallèles en faisant un angle l'un par rapport à l'autre. De préférence les deux réflecteurs sont perpendiculaires entre eux. Il peut être avantageux, dans le cas de pièces soumises à torsion de disposer les perforations ou alésages sous un angle entre 0° et 90° et dans un sens tel que cet angle augmente avec la déformation angulaire de torsion.

Suivant un autre mode d'exécution de l'invention, les réflecteurs consistent en deux alésages coaxiaux de faible diamètre, mais de diamètre différent et de profondeur différente, la différence de profondeur déterminant la zone exploitée de transit du rayon acoustique utile. Avantageusement, la zone de transition entre les deux alésages présente une arête vive et une surface plane de raccord, perpendiculaire à l'axe. Il est avantageux que l'onde acoustique pénètre dans la pièce par l'extrémité opposée à l'alésage. Il est certainement possible de trouver d'autres possibilités de réflecteurs et l'invention n'est pas limitée aux cas d'application cités, ni à la forme d'exécution particulière indiquee des réflecteurs.

La présente invention concerne également des pièces caractérisées en ce qu'elles comportent des réflecteurs artificiels.

Par pièce on entend notamment des éléments d' assemblage, par exemple, des boulons à haute résistance, des tiges filetées, lisses ou nervurées, des rivets, des goujons ou encore des éléments de structure, notamment des poutres ou autres éléments de construction.

Ces pièces sont avantageusement pourvues d'un moyen de positionnement géométrique du palpeur sur la face de contact, notamment une douille de positionnement ou un logement dans l'extrémité de la pièce.

Dans le but de mieux expliquer la présente invention, celle-ci sera décrite ci-dessous, en référence aux figures annexées dans lesquelles:

- la figure 1A représente une vue en coupe longitudinale d'un boulon à haute résistance, muni de deux réflecteurs artificiels et la figure 1B la coupe selon A-A dans la figure 1A ;

- la figure 2A représente une vue en coupe longitudinale et une autre variante d'un boulon à haute résistance muni de réflecteurs artificiels et la figure 2B la coupe selon A-A dans la figure 2A;

- la figure 3 illustre une application du procédé de mesure suivant l'invention de la mesure de contrainte dans un boulon;

- la figure 4 illustre la représentation de type A obtenue dans le cas de l'application représentée à la figure 3;

- la figure 5 est la représentation graphique des variations du temps de transit du rayon acoustique utile dans le cas d'une tige filetée M30 en acier en fonction de la contrainte pour différentes configurations respectives de l'élément d'assemblage constitué de la tige filetée et de ses deux écrous, lorsque la mesure de contrainte est réalisée suivant le procédé connu;

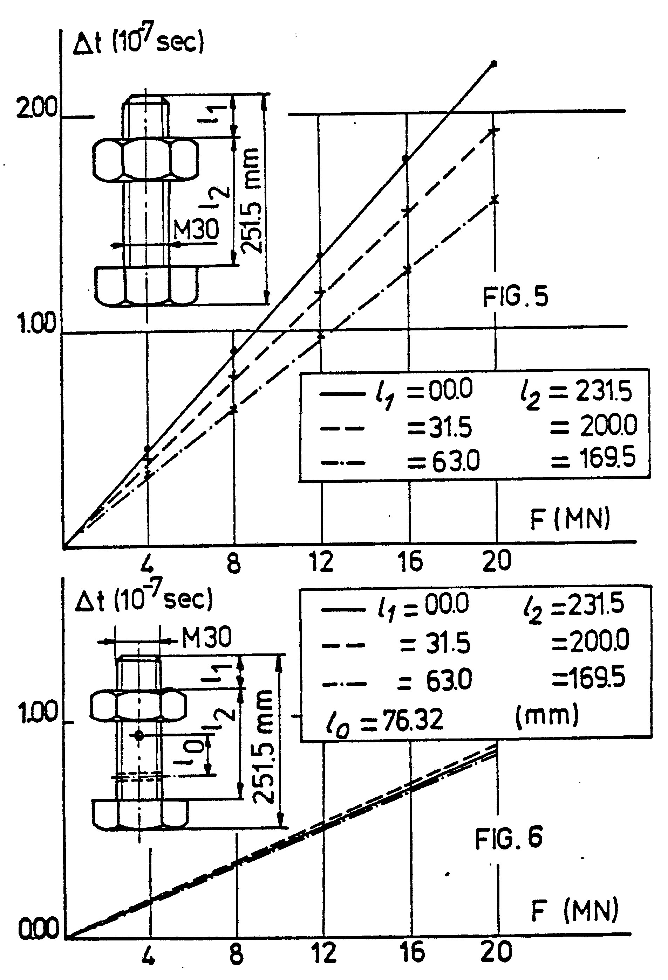

- la figure 6 est la représentation graphique des variations du temps de transit du rayon acoustique utile dans le cas d'une tige filetée M30 en acier en fonction de la contrainte pour différentes configurations respectives de l'élément d'assemblage constitué de la tige filetée et de ses deux écrous lorsque la mesure de contrainte est réalisée suivant le procédé de l'invention sur une tige filetée où des réflecteurs artificiels ont été créés qui consistent en des perforations transversales disposées dans des plans parallèles distants de la longueur $l_0$ et faisant un angle de 90° l'un par rapport à l'autre.

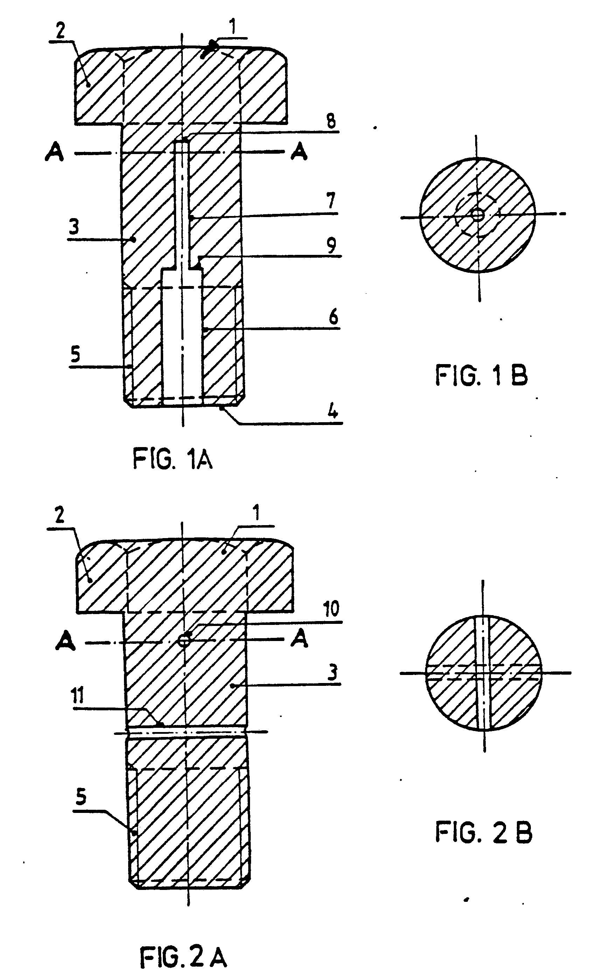

La figure 1 montre à titre d'exemple, un boulon à haute résistance 1 comportant une tête 2 et un corps 3 muni à son extrémité 4 opposée à la tête, d'un filet 5. A partir de l'extrémité 4 du boulon 1, on a usiné deux alésages 6, 7 coaxiaux de diamètre différent. L'alésage 6 présente avantageusement un diamètre supérieur à celui de l'alésage 7 pour ne pas être masqué par l' l' "ombre" que forme le premier réflecteur 8 constitué par le fond de l'alésage 7, lorsque le palpeur disposé sur la tête 2 envoie une onde ultrasonore à travers le boulon. Le deuxième réflecteur artificiel est créé par l'épaulement 9. Les alésages sont avantageusement disposés sur la ligne axiale du boulon.

On constate donc que l'on peut disposer les réflecteurs 8 et 9 de telle manière que la zone de mesure soit disposée uniquement dans la zone choisie de contrainte. Dans le présent cas d'apptication, la partie du corps du boulon comprise entre la surface d'appui de la tête et le filet engagé dans l'écrou est la zone dans laquelle la contrainte est importante.

Pour les mesures on a utilisé un appareil destiné aux mesures d'épaisseur par ultrasons de type UTG 5A-IIB-SONATEST qui calcule automatiquement la différence d'apparition des pieds de pics des deux échos résultants de la réflexion du rayon acoustique utile sur les deux réflecteurs artificiels, en éliminant les autres échos en particulier l'écho de début et de fond de pièces et le cas échéant les échos parasites de la pièce au-delà du second réflecteur artificiel par exemple ceux résultant d'arêtes et de surfaces inclinées des filets.

La figure 2 montre une autre manière de réaliser des réflecteurs artificiels. On a percé deux trous transversaux dans le corps 3 du boulon 1, perpendiculairement à l'axe de celui-ci. Les trous 10, 11 se trouvent avantageusement dans des plans parallèles tout en formant un angle l'un par rapport à l'autre en projection sur l'un des plans de manière à se croiser par exemple sur la ligne axiale. Les deux perforations 10, 11 sont avantageusement perpendiculaires l'une à l'autre.

On peut également imaginer un boulon présentant un alésage analogue à l'alésage 7 de la figure 1 et une perforation transversale semblable à la perforation 11 de la figure 2. Ainsi les ondes ultrasonores seront réfléchies par le fond de l'alésage 7 et par la paroi de l' alésage 11. De plus, les réflecteurs peuvent être positionnés pour que le temps de transit des échos perturbateurs des filets soit plus grand que le temps de transit du rayon acoustique utile réfléchi sur le réflecteur artificiel le plus éloigné. De cette façon, ils ne sont pas gênants pour la mesure dans le premier parcours de l'onde.

On peut également imaginer une armature dans un ouvrage d'art présentant des perforations transversales semblables aux perforations 10 et 11 de la figure 2, et qui seraient reproduites dans chaque zone de la barre où la connaissance de la contrainte est utile, disposées de façon qu'elles ne constituent pas des écrans acoustiques les unes par rapport aux autres et ce par exemple par un choix judicieux de leurs angles respectifs.

Il est bien entendu que dans l'application du procédé de mesure de contrainte suivant l'invention, il peut être suivant les cas, souhaitable de tenir compte des effets perturbateurs des facteurs autres que la contrainte qui peuvent faire varier le temps de transit du rayon acoustique utile comme par exemple la température et d'apporter la correction nécessaire.

La mesure de la température pourrait se faire concomitemment à la mesure de la contrainte en noyant de manière adéquate un capteur de température, tel par exemple un thermocouple dans le palpeur.

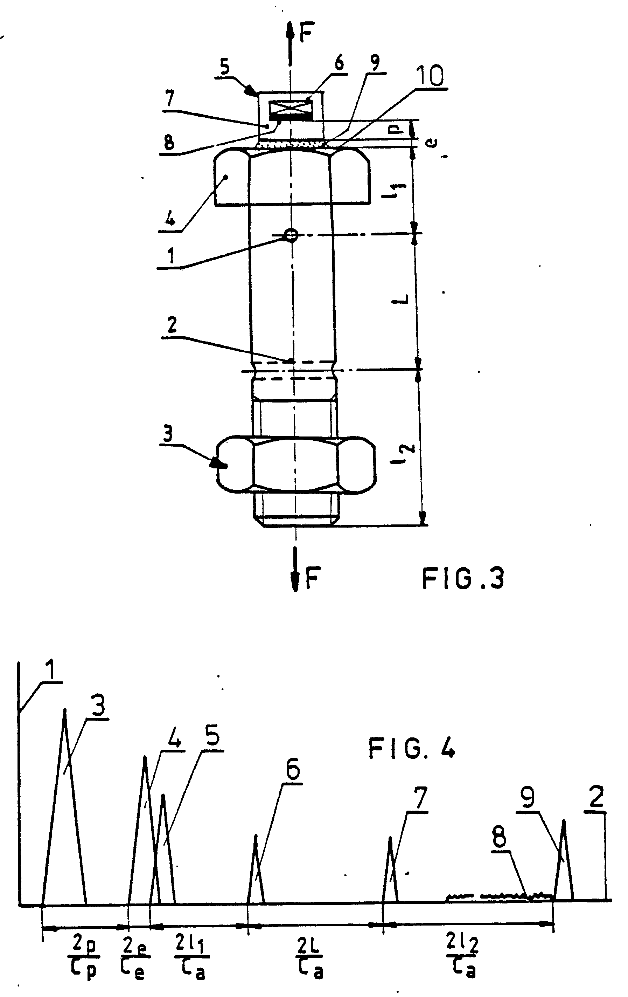

La figure 3 représente un boulon muni de deux réflecteurs artificiels internes en l'occurence des alésages transversaux 1 et 2 diamétraux dans deux plans parallèles perpendiculaires à l'axe du boulon. Le boulon est muni d'un écrou 3. Sur la tête 4 du boulon, on a disposé un palpeur 5 émetteur et récepteur d'ultrasons qui contient un cristal piézo électrique 8, une ligne de retard en plexiglass 7, une matière absorbante 6. Entre le palpeur 5 et l'extrémité du boulon 10, se trouve un liquide 9 de couplage.

La longueur du trajet dans le plexiglass vaut p, dans le liquide couplant e, dans le boulon jusqu'au premier réflecteur $1_1$ entre les deux réflecteurs L, entre le second réflecteur et l'extrémité $1_2$.

Le boulon est soumis à une force F qui fait varier le temps de transit caractéristique du rayon acoustique utile entre les deux réflecteurs.

Dans la figure 4 est donnée une représentation de type A des résultats obtenus. En ordonnée 1 se trouve la hauteur des pics d'émission ou de réflexion et en abscisse 2 le temps de transit.

Le pic 3 est lié à l'excitation du cristal 8 de la figure 3.

Le pic 4 est relatif à la réflexion à l'interface plexiglass-liquide de couplage.

Le pic 5 est relatif à la réflexion à l'interface liquide de couplage-acier.

Le pic 6 est relatif à la réflexion sur le réflecteur 1 de la figure 3.

Le pic 7 est relatif à la réflexion sur le reflecteur 2 de la figure 3.

Les pics 8 sont relatifs aux réflexions sur les faces et arêtes de filet.

Le pic 9 est relatif à la réflexion sur l'extrémité du boulon.

En abscisse, les valeurs des différents temps caractéristique sont indiquées.

$C_p$ est la vitesse de l'onde ultrasonore dans le plexiglass.

$C_e$ est la vitesse de l'onde ultrasonore dans l'huile.

$C_a$ est la vitesse de l'ordre ultrasonore dans l'acier.

Dans les figures 5 et 6, en ordonnée se trouve la variation du temps de transit entre les deux extrémités de la tige filetée M30. En abscisse l'effort de traction dans la partie tendue de la tige filetée M30 entre les deux écrous est de longueur $1_2$ égale à 231,5, 200 et 169,5 mm.

A chaque configuration de l'élément d'assemblage correspond une droite.

Dans le cas d'application de la figure 5, les droites sont notablement différentes tandis que dans le cas d'application de la figure 6, les droites sont sensiblement confondues; les écarts dans ce cas provenant sans doute du positionnement du palpeur légèrement différent pour chaque configuration de l'assemblage.

## Revendications

1. Procédé de mesure de contrainte dans un boulon ou pièce analogue en mettant à profit la réflexion d'une onde acoustique et en mesurant un temps de transit de celle-ci à l'aide d'un appareillage mesurant le temps d'apparition d'un écho provenant d'une interface caractérisé en ce qu'on choisit dans le boulon ou pièce analogue une ou plusieurs fins de trajets rectilignes de mesure matérialisées par un réflecteur artificiel interne, en ce qu'on envoie un faisceau d'ondes acoustiques de telle façon que des rayons acoustiques porteurs d'energie suffisante touchent les réflecteurs utiles, en ce qu'on sélectionne les échos correspondants aux réflecteurs, en ce qu'on détermine par mesure les temps de transit caractéristiques des rayons acoustiques utiles jusqu'aux réflecteurs artificiels internes et en ce qu'on transpose les temps de transit pour chaque réflecteur interne considéré isolément ou les différences respectives de temps de transit de chaque couple de réflecteurs en valeur de contrainte extérieure ou en valeur de contrainte dans la zone délimitée par chaque couple de réflecteurs.

2. Procédé selon la revendication 1 caractérisé en ce qu'on choisit dans le milieu un trajet rectiligne de mesure délimité par deux réflecteurs artificiels internes, en ce qu'on envoie un faisceau d'ondes acoustiques dont l'axe est substantiellement confondu avec le trajet rectiligne de mesure choisi, en ce qu'on sélectionne les échos correspondant aux réflecteurs artificiels internes, en ce qu'on mesure le temps de transit caractéristique d'un rayon acoustique entre les deux réflecteurs qui est la différence du temps de transit des rayons acoustiques, confondus ou substantiellement parallèles, jusqu'à chacun des deux réflecteurs et en ce qu'on transpose les valeurs de temps de transit en valeur de contrainte.

3. Procédé suivant la revendication 1 ou 2 caractérisé en ce qu'on utilise un faisceau ultrasonore étroit.

4. Procédé suivant la revendication 1 ou 2 caractérisé en ce qu'on utilise un faisceau ultrasonore focalisé.

5. Procédé suivant l'une quelconque des revendications précédentes caractérisé en ce qu'on effectue la mesure par une émission continue et détermination des fréquences de résonance de l'onde, dûes aux deux réflecteurs internes.

6. Procédé suivant l'une quelconque des revendications précédentes caractérisé en ce qu'on utilise des ondes ultrasonores transversales.

7. Procédé suivant l'une quelconque des revendications 1 à 5 caractérisé en ce qu'on utilise les ondes ultrasonores longitudinales.

8. Procédé suivant l'une quelconque des revendications 1 à 5 caractérisé en ce qu'on utilise des ondes ultrasonores de surface.

9. Procédé suivant l'une quelconque des revendications 1 à 5 caractérisé en ce qu'on utilise, en combinaison, une onde longitudinale et une onde transversale, concomitamment ou successivement.

10. Procédé suivant l'une quelconque des revendications précédentes caractérisé en ce que les réflecteurs artificiels consistent en des perforations ou alésages transversaux disposés dans des plans parallèles en formant un angle l'un par rapport à l'autre.

11. Procédé suivant la revendication 10 caractérisé en ce que les perforations ou alésages forment un angle de 90° entre eux.

12. Procédé suivant la revendication 10 caractérisé en ce que les perforations ou alésages forment un angle compris entre 0° et 90° et dans un sens tel que cet angle augmente avec la déformation angulaire de torsion lors du serrage.

13. Procédé suivant l'une quelconque des revendications 1 à 9 caractérisé en ce que les réflecteurs consistent en deux alésages coaxiaux de faible diamètre, mais de diamètres différents et de profondeur différente.

14. Procédé suivant l'une quelconque des revendications précédentes caractérisé en ce que le positionnement du palpeur émetteur et récepteur se fait par la recherche de la position où les amplitudes des échos de réflexion sur les réflecteurs artificiels internes sont autant que possible simultanément maximum ou atteignent des hauteurs respectives et relatives repérées à l'avance lors de l'étalonnage.

15. Procédé selon l'une quelconque des revendications 1 à 14 caractérisé en ce que la mesure s'effectue en exploitant deux fréquences différentes d'ondes acoustiques.

16. Pièce pour la mise en oeuvre du procédé selon l'une quelconque des revendications 1 à 15 caractérisée en ce quelle comporte un ou plusieurs réflecteurs artificiels (8, 9) pour les ondes acoustiques.

17. Pièce selon la revendication 16 caractérisée en ce quelle est constituée par un boulon, une tige filetée ou un tirant.

18. Pièce suivant la revendication 16 ou 17 caractérisée en ce quelle comporte des réflecteurs artificiels (8, 9) qui consistent en des perforations ou alésages transversaux disposés dans des plans parallèles, en formant un angle l'un par rapport à l'autre.

19. Pièce suivant la revendication 18 caracterisée en ce que les perforations ou alésages (10, 11) forment un angle de 90° entre eux.

20. Pièce suivant la revendication 18 caracterisée en ce que les perforations ou alésages (10, 11) forment un angle compris entre 0° et 90° et dans un sens tel que cet angle augmente avec la déformation angulaire de torsion lors du serrage.

21. Pièce suivant l'une quelconque des revendications 16 à 20 caractérisée en ce qu'elle comporte des moyens de positionnement tels qu'une douille ou un logement dans l'extrémité de la pièce destinée à recevoir un palpeur.

**Patentansprüche**

1. Verfahren zum Messen von Spannungen in einem Bolzen oder analogen Werkstück, indem man die Reflexion einer akustischen Welle ausnutzt und eine Durchgangszeit derselben mit Hilfe einer die Zeit des Auftretens eines von einer Grenzfläche stammenden Echos messenden Apparatur mißt, dadurch gekennzeichnet, daß man in dem Bolzen oder analogen Werkstück ein oder mehrere Enden gerader Meßstrecken, die durch einen inneren künstlichen Reflektor markiert sind, auswählt, daß man ein Bündel akustischer Wellen derart ausschickt, daß die genügend Energie tragenden akustischen Strahlen die brauchbaren Reflektoren berühren, daß man die den Reflektoren entsprechenden Echos selektiert, daß man durch Messen der für die brauchbaren akustischen Strahlen charakteristischen Durchgangszeiten bis zu den inneren künstlichen Reflektoren bestimmt und daß man die Durchgangszeiten für jeden inneren Reflektor isoliert betrachtet oder die betreffenden Differenzen der Durchgangszeit für jedes Reflektorenpaar in einen Wert der äußeren Spannung oder einen Wert der Spannung in der durch jedes Reflektorenpaar begrenzten Zone transponiert.

2. Verfahren nach Anspruch 1, dadurch gekennzeichnet, daß man in dem Medium eine gerade Meßstrecke auswählt, die durch zwei innere künstliche Reflektoren begrenzt ist, daß man ein Bündel akustischer Wellen, deren Achse im wesentlichen mit der ausgewählten geraden Meßstrecke verschmolzen ist, ausschickt, daß man die den inneren Reflektoren entsprechenden Echos auswählt, daß man die für einen akustischen Strahl zwischen den beiden Reflektoren charakteristische Durchgangszeit, die die Differenz der Durchgangszeit der akustischen Strahlen, verschmolzen oder im wesentlichen parallel, bis zu jedem der beiden Reflektoren ist, mißt und daß man die Werte der Durchgangszeit in den Spannungswert transponiert.

3. Verfahren nach Anspruch 1 oder 2, dadurch gekennzeichnet, daß man ein schmales Ultraschallbündel verwendet.

4. Verfahren nach Anspruch 1 oder 2, dadurch gekennzeichnet, daß man ein fokussiertes Ultraschallbündel verwendet.

5. Verfahren nach einem der vorausgehenden Ansprüche, dadurch gekennzeichnet, daß man das Messen durch eine kontinuierliche Emission und Bestimmung der Resonanzfrequenzen der Welle, die zu den beiden inneren Reflektoren gehören, bewirkt.

6. Verfahren nach einem der vorausgehenden Ansprüche, dadurch gekennzeichnet, daß man schräg verlaufende Ultraschallwellen verwendet.

7. Verfahren nach einem der vorausgehenden Ansprüche 1 bis 5, dadurch gekennzeichnet, daß man longitudinale Ultraschallwellen verwendet.

8. Verfahren nach einem der Ansprüche 1 bis 5, dadurch gekennzeichnet, daß man Ultraschalloberflächenwellen verwendet.

9. Verfahren nach einem der Ansprüche 1 bis 5, dadurch gekennzeichnet, daß man in Kombination gleichzeitig oder aufeinanderfolgend eine Longitudinalwelle und eine Transversalwelle verwendet.

10. Verfahren nach einem der vorausgehenden Ansprüche, dadurch gekennzeichnet, daß die künstlichen Reflektoren aus schräg verlaufenden Perforationen oder Bohrungen bestehen, die in parallelen und zueinander einen Winkel bildenden Ebenen angeordnet sind.

11. Verfahren nach Anspruch 10, dadurch gekennzeichnet, daß die Perforationen oder Bohrungen einen Winkel von 90° zueinander bilden.

12. Verfahren nach Anspruch 10, dadurch gekennzeichnet, daß die Perforationen oder Bohrungen einen Winkel zwischen 0° und 90° derart bilden, daß dieser Winkel mit der Torsionswinkeldeformation während einer Pressung zunimmt.

13. Verfahren nach einem der Ansprüche 1 bis 9, dadurch gekennzeichnet, daß die Reflektoren aus zwei koaxialen Bohrungen geringen Durchmessers, aber unterschiedlicher Durchmesser und unterschiedlicher Breite bestehen.

14. Verfahren nach einem der vorausgehenden Ansprüche, dadurch gekennzeichnet, daß die Positionierung des emittierenden und empfangenden Tasters durch die Suche der Position entsteht, wo die Amplituden des Reflexionsechos auf den inneren künstlichen Reflektoren möglichst gleichzeitig maximal sind oder diesbezüglich und relative markierte Höhen vorher während der Eichung erreichen.

15. Verfahren nach einem der Ansprüche 1 bis 14, dadurch gekennzeichnet, daß das Messen erfolgt, indem man zwei unterschiedliche Frequenzen akustischer Wellen ausnutzt.

16. Werkstück zur Durchführung des Verfahrens nach einem der Ansprüche 1 bis 15, dadurch gekennzeichnet, daß es einen oder mehrere künstliche Reflektoren (8, 9) für die akustischen Wellen aufweist.

17. Werkstück nach Anspruch 16, dadurch gekennzeichnet, daß es aus einem Bolzen, einem Gewindestift oder einem Ankerbolzen besteht.

18. Werkstück nach Anspruch 16 oder 17, dadurch gekennzeichnet, daß es künstliche Reflektoren (8, 9) aufweist, die aus schräg verlaufenden Perforationen oder Bohrungen bestehen, welche in parallelen, einen Winkel zueinander bildenden Ebenen angeordnet sind.

19. Werkstück nach Anspruch 18, dadurch gekennzeichnet, daß die Perforationen oder Bohrungen (10, 11) einen Winkel von 90° zueinander bilden.

20. Werkstück nach Anspruch 18, dadurch gekennzeichnet, daß die Perforationen oder Bohrungen (10, 11) einen Winkel zwischen 0° und 90° und derart bilden, daß der Winkel während einer Pressung mit der Torsionswinkeldeformation zunimmt.

21. Werkstück nach einem der Ansprüche 16 bis 20, dadurch gekennzeichnet, daß es Mittel zur Positionierung, wie eine Buchse oder eine Lagerung in dem Ende des zur Aufnahme eines Tasters bestimmten Werkstückes, aufweist.

**Claims**

1. Process for the measurement of stress in a bolt or a similar part by making use of the reflection of an acoustic wave and by measuring a transit time of the latter with the aid of an equipment measuring the time of appearance of an echo coming from an interface, characterized in that one or a plurality of ends of rectilinear measurement paths, having the material form of an internal artificial reflector, is or are selected in the bolt or in the similar part, in that a beam of acoustic waves is transmitted in such a manner that acoustic rays carrying sufficient energy, touch the useful reflectors, in that the echoes corresponding to the reflectors are selected, in that the transit times characteristic of the useful acoustic rays as far as the internal artificial reflectors are determined by measurement, and in that the transit times for each internal reflector considered individually, or the respective differences of transit time of each pair of reflectors, are transposed into a value of external stress or into a value of stress in the zone delimited by each pair of reflectors.

2. Process as claimed in claim 1, characterized in that a rectilinear measurement path bounded by two internal artificial reflectors is selected in the medium, in that a beam of acoustic waves, the axis of which is substantially identical with the selected rectilinear measurement path, is transmitted, in that the echoes corresponding to the internal artificial reflectors are selected, in that the transit time characteristic of an acoustic ray between the two reflectors is measured, this time being the difference between the transit times of the coincident or substantially parallel acoustic rays as far as each of the two reflectors, and in that the values of transit time are transposed into values of stress.

3. Process as claimed in claim 1 or 2, characterized in that a narrow ultrasonic beam is used.

4. Process as claimed in claim 1 or 2, characterized in that a focused ultrasonic beam is used.

5. Process as claimed in any one of the preceding claims, characterized in that the measurement is made by continuous transmission and determination of the resonance frequencies of the wave which are due to the two internal reflectors.

8. Process as claimed in any one of the preceding claims, characterized in that transverse ultrasonic waves are used.

7. Process claimed in any one of claims 1 to 5, characterized in that longitudinal ultrasonic waves are used.

8. Process as claimed in any one of claims 1 to 5, characterized in that surface ultrasonic waves are used.

9. Process as claimed in a ny one of claims 1 to 5, characterized in that a longitudinal wave and a transverse wave are used in combination, concomitantly or in succession.

10. Process as claimed in any one of the preceding claims, characterized in that the artificial reflectors consist of transverse perforations or bores disposed in parallel planes and forming an angle in relation to one another.

11. Process as claimed in claim 10, characterized in that the perforations or bores form an angle of 90° between them.

12. Process as claimed in claim 10, characterized in that the perforations or bores form an angle between 0° and 90° in a direction such that this angle increases with the angular torsional deformation on tightening.

13. Process as claimed in any one of claims 1 to 9, characterized in that the reflectors consist of two coaxial bores of small diameter, but of different diameters and of different depths.

14. Process as claimed in any one of the preceding claims, characterized in that the positioning of the transmitter/receiver sensor is effected by finding the position in which the amplitudes of the reflection echoes on the internal artificial reflectors are as far as possible simultaneously maximum or attain respective relative heights marked in advance during the calibration.

15. Process as claimed in any one of claims 1 to 14, characterized in that the measurement is made by utilizing two different frequencies of acoustic waves.

16. Part for applying the process as claimed in any one of claims 1 to 15, characterized in that it has one or more artificial reflectors (8, 9) for the acoustic waves.

17. Part as claimed in claim 16, characterized in that it consists of a bolt, a threaded rod, or a tie.

18. Part as claimed in claim 16 or 17, characterized in that it is provided with artificial reflectors (8, 9) which consist of transverse perforations or bores disposed in parallel planes and forming an angle in relation to one another.

19. Part as claimed in claim 18, characterized in that the perforations or bores (10, 11) form an angle of 90° between them.

20. Part as claimed in claim 18, characterized in that the perforations or bores (10, 11) form an angle between 0° and 90° in such a direction that this angle increases with the angular torsional deformation on tightening.

21. Part as claimed in any one of claims 16 to 20, characterized in that it is provided with positioning means such as a bush or a socket in the end of the part intended to receive a sensor.

FIG. 1A

FIG. 1 B

FIG. 2 A

FIG. 2 B

FIG.3

FIG. 4

$$\frac{2p}{\tau_p} \quad \frac{2e}{\tau_e} \quad \frac{2l_1}{\tau_a} \quad \frac{2L}{\tau_a} \quad \frac{2l_2}{\tau_a}$$

FIG.5

FIG.6